# EUROPEAN PATENT APPLICATION

(11) **EP 4 576 895 A1**
(43) Date of publication of application: **25.06.2025**
(21) Application number: 23867139.0
(22) Date of filing: 31.07.2023
(51) Int. Cl.: H04W 68/00

(54) **COMMUNICATION METHOD AND RELATED APPARATUS**

(30) Priority: 20.09.2022 CN 202211146254
(71) Applicant: Huawei Technologies Co., Ltd., Shenzhen, Guangdong 518129 (CN)
(72) Inventor: XIE, Xi, Shenzhen, Guangdong 518129 (CN); YAO, Qinbo, Shenzhen, Guangdong 518129 (CN); SHA, Tong, Shenzhen, Guangdong 518129 (CN); KONG, Lingshuai, Shenzhen, Guangdong 518129 (CN); DU, Jun, Shenzhen, Guangdong 518129 (CN)
(74) Representative: Epping - Hermann - Fischer
(86) International application number: PCT/CN2023/110402
(87) International publication number: WO 2024/060844

(57) **Abstract**

This application provides a communication method and a related apparatus. The method is applied to a terminal device. The method includes: sending paging capability information to an access network device, where the paging capability information indicates one or more paging capabilities supported by a terminal device; and receiving first information from the access network device, where the first information indicates that the access network device successfully maintains one or more paging capabilities. Based on the solutions in embodiments of this application, the terminal device and a network device can have a consistent understanding of a paging capability of the terminal device, to improve paging reliability.

## Description

This application claims priority to Chinese Patent Application No. 202211146254.5, filed with the China National Intellectual Property Administration on September 20, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

A network device may send a paging message to terminal devices in a radio resource control (radio resource control, RRC) idle state, an RRC inactive state, and an RRC connected state, to notify the terminal devices to perform corresponding operations or update related parameters. In a current paging procedure, because a terminal device needs to monitor each paging occasion (paging occasion, PO) and receive a paging message to determine whether the terminal device is paged, a large amount of energy consumption exists.

Based on this, a paging mechanism that is based on a paging capability of the terminal device, for example, a paging early indication (paging early indication, PEI) paging mechanism, is proposed in a related technology. A basic idea of the paging mechanism is as follows: Subgrouping is performed on terminal devices that monitor a same paging occasion (paging occasion, PO), in other words, terminal devices on a same PO are classified into different subgroups (subgroup). The network device indicates, by using a PEI, related information of a subgroup to which a terminal device for which current paging is belongs. When receiving the PEI, a terminal device can determine, based on a subgroup indication (subgroup indication) carried in the PEI, whether the current paging is for a subgroup to which the terminal device belongs. If the current paging is for the subgroup to which the terminal device belongs, the terminal device monitors a PO based on an original paging mechanism, and receives and decodes a paging message. If the current paging is not for the subgroup to which the terminal device belongs, the terminal device does not monitor a PO and does not receive paging for the current paging. Therefore, power consumption of the terminal device can be reduced.

It should be noted that, that the terminal device and the network device have a consistent understanding of the paging capability of the terminal device is a prerequisite for the terminal device and the network device to normally use the paging mechanism that is based on the paging capability of the terminal device. Therefore, how to enable the terminal device and the network device to have the consistent understanding of the paging capability of the terminal device, so that the paging mechanism that is based on the paging capability of the terminal device can be normally used, to improve paging reliability becomes one of urgent problems to be resolved currently.

### SUMMARY

This application provides a communication method and a related apparatus, so that a terminal device and a network device can have a consistent understanding of a paging capability of the terminal device, to improve paging reliability.

According to a first aspect, this application provides a communication method. The method is applied to a terminal device, and the method includes: sending paging capability information to an access network device, where the paging capability information indicates one or more paging capabilities supported by the terminal device; receiving first information from the access network device, where the first information indicates that the access network device successfully maintains one or more paging capabilities, or indicates at least one paging capability successfully maintained by the access network device, and the at least one paging capability successfully maintained by the access network device is at least one of the one or more paging capabilities supported by the terminal device.

In the first aspect, the terminal device receives, from the access network device, the first information indicating that the paging capability reported by the terminal device is successfully maintained. In this manner, the terminal device may determine whether the access network device successfully maintains the paging capability reported by the terminal device, so that the terminal device and a network device have a consistent understanding of the paging capability of the terminal device, to improve paging reliability.

In a possible implementation, the method further includes: receiving a capability enquiry message from the access network device, where the capability enquiry message is used to request the terminal device to report a capability; and the sending paging capability information to an access network device includes: sending the paging capability information to the access network device based on the capability enquiry message.

In this implementation, the capability enquiry message may be used to trigger the terminal device to report the capability of the terminal device.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

In a possible implementation, the first information includes one or more first indication information and/or one or more second indication information; the first indication information indicates one paging capability; and the second indication information indicates a plurality of paging capabilities.

In a possible implementation, the plurality of paging capabilities indicated by the second indication information are predefined in a protocol, are configured by the access network device, or are preconfigured.

According to a second aspect, this application provides a communication method. The method is applied to a terminal device, and the method includes: receiving second information from an access network device, where the second information indicates one or more paging capabilities requested by the access network device; and sending paging capability information to the access network device based on the second information, where the paging capability information indicates at least one paging capability supported by the terminal device, and the at least one paging capability is at least one of the one or more paging capabilities requested by the access network device.

In the second aspect, when the access network device requests the paging capability by using the second information, the terminal device reports, based on the second information, the paging capability supported by the terminal device. In this manner, the terminal device may determine that the reported paging capability can be successfully maintained by a network device, so that the terminal device and the network device have a consistent understanding of the paging capability of the terminal device, to improve paging reliability.

In a possible implementation, the second information includes one or more third indication information and/or one or more fourth indication information; the third indication information indicates one or more paging capabilities; and the fourth indication information indicates one or more paging capability fields, and the paging capability field corresponds to one or more paging capabilities.

In this implementation, the third indication information and the fourth indication information may be two different types of filters (filter). The terminal device may report a corresponding paging capability of the terminal device based on the filter sent by the access network device, to determine a subsequent paging operation.

In a possible implementation, the one or more paging capabilities corresponding to the paging capability field are predefined in a protocol, are configured by the access network device, or are preconfigured.

In a possible implementation, the receiving second information from an access network device includes: receiving a capability enquiry message from the access network device, where the capability enquiry message is used to request the terminal device to report a capability and includes the second information; and the sending paging capability information to the access network device based on the second information includes: sending the paging capability information to the access network device based on the capability enquiry message.

In this implementation, the capability enquiry message may be used to trigger the terminal device to report the capability of the terminal device.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

According to a third aspect, this application provides a communication method. The method is applied to a terminal device, and the method includes: receiving third information from an access network device, where the third information indicates one or more paging capabilities that can be maintained by the access network device; and sending paging capability information to the access network device based on the third information, where the paging capability information indicates at least one paging capability supported by the terminal device, and the at least one paging capability supported by the terminal device is at least one of the one or more paging capabilities that can be maintained by the access network device.

In the third aspect, the access network device notifies, by using the third information, the paging capability that can be maintained by the access network device, and the terminal device reports, based on the third information, the paging capability supported by the terminal device. In this manner, the terminal device may determine that the reported paging capability can be successfully maintained by a network device, so that the terminal device and the network device have a consistent understanding of the paging capability of the terminal device, to improve paging reliability.

In a possible implementation, the one or more paging capabilities that can be maintained by the access network device include the one or more paging capabilities supported by the terminal device.

In this implementation, the paging capability reported by the terminal device is a capability in a range of paging capabilities that can be maintained by the access network device. Therefore, it can be ensured that the paging capability reported by the terminal device can be successfully interpreted/maintained by the network device.

In a possible implementation, the third information includes one or more of the following: one or more fifth indication information, one or more sixth indication information, one or more seventh indication information, and one or more eighth indication information;
the fifth indication information indicates one or more paging capabilities; the sixth indication information indicates one or more paging capability fields, and the paging capability field corresponds to one or more paging capabilities; the seventh indication information indicates one or more features, and the feature corresponds to one or more paging capabilities; or the eighth indication information indicates one or more protocol versions, and the protocol version corresponds to one or more paging capabilities.

In this implementation, specific manners in which the third information indicates the one or more paging capabilities that can be maintained by the access network device may include the following four manners: 1. The third information directly includes a paging capability that can be maintained by the access network device. 2. The third information directly includes a paging capability field that can be maintained by the access network device. 3. The third information directly includes a feature supported by the access network device. 4. The third information directly includes a protocol version supported by the access network device. The one or more paging capabilities that can be maintained by the access network device are paging capabilities corresponding to the feature, and the one or more paging capabilities that can be maintained by the access network device are paging capabilities supported by the protocol version.

In a possible implementation, the method further includes: receiving a capability enquiry message from the access network device, where the capability enquiry message is used to request the terminal device to report a capability; and the sending paging capability information to the access network device based on the third information includes: sending the paging capability information to the access network device based on the third information and the capability enquiry message.

In this implementation, the terminal device may send the paging capability information to the access network device, based on triggering of the capability enquiry message and the paging capability that can be maintained by the access network device and that is indicated by the third information.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

According to a fourth aspect, this application provides a communication method. The method is applied to a terminal device, and the method includes: determining a paging capability information element; and sending the paging capability information element to an access network device, where the paging capability information element includes one or more paging capabilities supported by the terminal device.

In this application, the terminal device reports the paging capability information element to the access network device, so that the access network device sends the paging capability information element to a core network device. In this manner, the terminal device may determine that the paging capability reported by using the paging capability information element can be successfully maintained by a network device, so that the terminal device and the network device have a consistent understanding of the paging capability of the terminal device, to improve paging reliability.

In a possible implementation, the one or more paging capabilities that are allowed to be included in the paging capability information element are predefined in a protocol, are configured by the access network device, or are preconfigured.

In a possible implementation, the method further includes: receiving a capability enquiry message from the access network device, where the capability enquiry message is used to request the terminal device to report a capability.

In this implementation, the capability enquiry message may be used to trigger the terminal device to report the capability of the terminal device.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

According to a fifth aspect, this application provides a communication method. The method is applied to an access network device, and the method includes: receiving paging capability information from a terminal device, where the paging capability information indicates one or more paging capabilities supported by the terminal device; and sending first information to the terminal device, where the first information indicates that the access network device successfully maintains one or more paging capabilities, or indicates at least one paging capability successfully maintained by the access network device, and the at least one paging capability successfully maintained by the access network device is at least one of the one or more paging capabilities supported by the terminal device.

In a possible implementation, the method further includes: sending a capability enquiry message to the terminal device, where the capability enquiry message is used to request the terminal device to report a capability.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

In a possible implementation, the first information includes one or more first indication information and/or one or more second indication information; the first indication information indicates that the access network device successfully maintains one paging capability; and the second indication information indicates that the access network device successfully maintains a plurality of paging capabilities.

In a possible implementation, the plurality of paging capabilities indicated by the second indication information are predefined in a protocol, are configured by the access network device, or are preconfigured.

In a possible implementation, the method further includes: parsing the one or more paging capabilities included in the paging capability information; generating a paging capability information element based on the one or more paging capabilities; and sending the paging capability information element to a core network device.

According to a sixth aspect, this application provides a communication method. The method is applied to an access network device, and the method includes: sending second information to a terminal device, where the second information indicates one or more paging capabilities requested by the access network device; and receiving paging capability information from the terminal device, where the paging capability information indicates at least one paging capability supported by the terminal device, and the at least one paging capability is at least one of the one or more paging capabilities requested by the access network device.

In a possible implementation, the second information includes one or more third indication information and/or one or more fourth indication information; the third indication information indicates one or more paging capabilities; and the fourth indication information indicates one or more paging capability fields, and the paging capability field corresponds to one or more paging capabilities.

In a possible implementation, the one or more paging capabilities corresponding to the paging capability field are predefined in a protocol, are configured by the access network device, or are preconfigured.

In a possible implementation, the sending second information to a terminal device includes: sending a capability enquiry message to the terminal device, where the capability enquiry message is used to request the terminal device to report a capability and includes the second information.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

In a possible implementation, the method further includes: parsing the one or more paging capabilities included in the paging capability information; generating a paging capability information element based on the one or more paging capabilities; and sending the paging capability information element to a core network device.

According to a seventh aspect, this application provides a communication method. The method is applied to an access network device, and the method includes: sending third information to a terminal device, where the third information indicates one or more paging capabilities that can be maintained by the access network device; and receiving paging capability information from the terminal device, where the paging capability information indicates at least one paging capability supported by the terminal device, and the at least one paging capability supported by the terminal device is at least one of the one or more paging capabilities that can be maintained by the access network device.

In a possible implementation, the one or more paging capabilities that can be maintained by the access network device include the one or more paging capabilities supported by the terminal device.

In a possible implementation, the third information includes one or more of the following: one or more fifth indication information, one or more sixth indication information, one or more seventh indication information, and one or more eighth indication information; the fifth indication information indicates one or more paging capabilities; the sixth indication information indicates one or more paging capability fields, and the paging capability field corresponds to one or more paging capabilities; the seventh indication information indicates one or more features, and the feature corresponds to one or more paging capabilities; or the eighth indication information indicates one or more protocol versions, and the protocol version corresponds to one or more paging capabilities.

In a possible implementation, the method further includes: sending a capability enquiry message to the terminal device, where the capability enquiry message is used to request the terminal device to report a capability.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

In a possible implementation, the method further includes: parsing the one or more paging capabilities included in the paging capability information; generating a paging capability information element based on the one or more paging capabilities; and sending the paging capability information element to a core network device.

According to an eighth aspect, this application provides a communication method. The method is applied to an access network device, and the method includes: receiving a paging capability information element from a terminal device, where the paging capability information element includes one or more paging capabilities supported by the terminal device; and sending the paging capability information element to a core network device.

In a possible implementation, the one or more paging capabilities that are allowed to be included in the paging capability information element are predefined in a protocol, are configured by the access network device, or are preconfigured.

In a possible implementation, the method further includes: sending a capability enquiry message to the terminal device, where the capability enquiry message is used to request the terminal device to report a capability.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

According to a ninth aspect, this application provides a communication apparatus. The communication apparatus includes a module or a unit configured to perform the method according to any one of the first aspect to the fourth aspect.

According to a tenth aspect, this application provides a communication apparatus. The communication apparatus includes a module or a unit configured to perform the method according to any one of the fifth aspect to the eighth aspect.

According to an eleventh aspect, this application provides a communication apparatus, including a processor, a transceiver, and a memory. The processor and the transceiver are coupled to the memory. The memory stores a computer program. The processor and the transceiver are configured to invoke the computer program in the memory, to enable the communication apparatus to perform the method according to any one of the first aspect to the fourth aspect.

In a possible design, the communication apparatus may be a chip or a device including the chip that performs the method according to any one of the first aspect to the fourth aspect.

According to a twelfth aspect, this application provides a communication apparatus, including a processor, a transceiver, and a memory. The processor and the transceiver are coupled to the memory. The memory stores a computer program. The processor and the transceiver are configured to invoke the computer program in the memory, to enable the communication apparatus to perform the method according to any one of the fifth aspect to the eighth aspect.

In a possible design, the communication apparatus may be a chip or a device including the chip that performs the method according to any one of the fifth aspect to the eighth aspect.

According to a thirteenth aspect, this application provides a communication apparatus, including a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to any one of the first aspect to the fourth aspect through a logic circuit or by executing code instructions.

According to a fourteenth aspect, this application provides a communication apparatus, including a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to any one of the fifth aspect to the eighth aspect through a logic circuit or by executing code instructions.

According to a fifteenth aspect, this application provides a computer-readable storage medium. The storage medium stores a computer program or instructions. When the computer program or the instructions are executed by a computer, the method according to any one of the first aspect to the fourth aspect is implemented.

According to a sixteenth aspect, this application provides a computer-readable storage medium. The storage medium stores a computer program or instructions. When the computer program or the instructions are executed by a computer, the method according to any one of the fifth aspect to the eighth aspect is implemented.

According to a seventeenth aspect, this application provides a computer program product. When a computer reads and executes the computer program product, the computer is enabled to perform the method according to any one of the first aspect to the fourth aspect.

According to an eighteenth aspect, this application provides a computer program product. When a computer reads and executes the computer program product, the computer is enabled to perform the method according to any one of the fifth aspect to the eighth aspect.

According to a nineteenth aspect, this application provides a communication system. The communication system includes the terminal device according to the ninth aspect, the eleventh aspect, or the thirteenth aspect, and the access network device according to the tenth aspect, the twelfth aspect, or the fourteenth aspect.

### BRIEF DESCRIPTION OF DRAWINGS

FIG. 1 is a diagram of a network architecture of a communication system;
FIG. 2 is a diagram of a paging occasion and a paging cycle;
FIG. 3 is a diagram of sending a WUS/PEI;
FIG. 4 is a schematic flowchart of a communication method according to an embodiment of this application;
FIG. 5 is another schematic flowchart of a communication method according to an embodiment of this application;
FIG. 6 is another schematic flowchart of a communication method according to an embodiment of this application;
FIG. 7 is another schematic flowchart of a communication method according to an embodiment of this application;
FIG. 8 is a diagram of a structure of a communication apparatus according to an embodiment of this application;
FIG. 9 is a diagram of a structure of another communication apparatus according to an embodiment of this application;
FIG. 10 is a diagram of a structure of another communication apparatus according to an embodiment of this application; and
FIG. 11 is a diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. The term "and/or" in this specification describes only an association relationship between associated objects and represents that three relationships may exist. For example, A and/or B may represent the following three cases: Only A exists, both A and B exist, and only B exists. A and B may be singular or plural. In addition, "at least one" means one or more, and "a plurality of" means two or more. "One or more of the following: ...", "at least one of ...", and similar expressions thereof mean any combination of the listed items. For example, "one or more of the following: A, B, or C" may represent the following six cases: only A exists, only B exists, only C exists, both A and B exist, both B and C exist, both A and C exist, and A, B, and C exist, where A, B, and C may be singular or plural. Terms such as "first" and "second" do not limit a quantity and an execution sequence, and the terms such as "first" and "second" do not indicate a definite difference.

In this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

The technical solutions in embodiments of this application may be applied to various communication systems, for example, a long term evolution (long term evolution, LTE) system, a wireless fidelity (wireless fidelity, Wi-Fi) system, a worldwide interoperability for microwave access (worldwide interoperability for microwave access, WiMAX) communication system, a 5th generation (5th generation, 5G) system or a new radio (new radio, NR) system, and a future communication system. This is not limited herein.

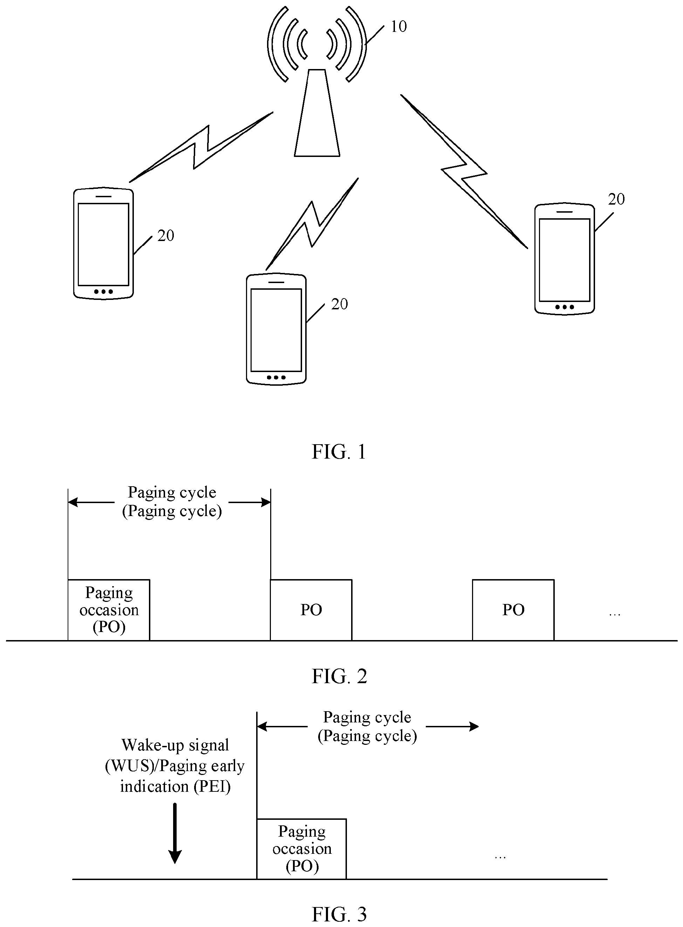

FIG. 1 is a diagram of a network architecture of a communication system. As shown in FIG. 1, the communication system may include one or more network devices 10 (only one network device 10 is shown) and one or more terminal devices 20 that communicate with each network device 10. FIG. 1 is merely a diagram, and does not constitute a limitation on a scenario to which the technical solutions provided in this application are applicable.

The terminal device includes a device that provides a user with voice and/or data connectivity, for example, may include a handheld device having a wireless connection function, or a processing device connected to a wireless modem. The terminal device may communicate with a core network via a radio access network. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communications (machine-to-machine/machine-type communications, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, a user device, or the like. For example, the terminal device may include a mobile phone (also referred to as a "cellular" phone), a computer having a mobile terminal device, a portable, pocket-sized, hand-held, or a computer-embedded mobile apparatus, or the like, such as a personal communications service (personal communications service, PCS) phone, a cordless phone, a session initiation protocol (session initiation protocol, SIP) phone, a wireless local loop (wireless local loop, WLL) station, a personal digital assistant (personal digital assistant, PDA), and the like. The terminal device may further include a restricted device, for example, a device with low power consumption, a device with a limited storage capability, or a device with a limited calculation capability.

The network device may be a core network device, for example, a core network (core network, CN), or may be an access network device, for example, a radio access network (radio access network, RAN), or may include both a core network device and an access network device.

The core network device is configured to implement functions such as mobility management, data processing, session management, and policy and charging. Names of devices that implement functions of the core network in systems of different access technologies may be different. This is not limited in this application. A 5G network is used as an example. Logical network elements of a 5GC include an access and mobility management function (access and mobility management function, AMF), a session management function (session management function, SMF), a user plane function (user plane function, UPF), or the like.

In embodiments of this application, an apparatus configured to implement a function of the core network device may be the core network device, or may be an apparatus that can support the core network device in implementing the function, for example, a chip system or a combined component or part that can implement the function of the core network device. The apparatus may be installed in the core network device.

The access network device may include a next-generation base station (generation NodeB, gNB), an evolved NodeB (evolved NodeB, eNB), a next-generation evolved NodeB (next generation eNB, ng-eNB), a wireless backhaul device, a radio network controller (radio network controller, RNC), a NodeB (NodeB, NB), a base station controller (base station controller, BSC), a base transceiver station (base transceiver station, BTS), a home base station ((home evolved NodeB, HeNB) or (home NodeB, HNB)), a baseband unit (baseBand unit, BBU), a transmission reception point (transmitting and receiving point, TRP), a transmission point (transmitting point, TP), a mobile switching center, and the like in a 5G communication system. This is not limited herein.

The access network device may further include one or more central units (central unit, CU), one or more distributed units (distributed unit, DU), or one or more CUs and one or more DUs. For example, functions of the CU may be implemented by one entity or different entities. For example, the functions of the CU are further divided. In other words, a control plane and a user plane are separated and implemented by different entities, which are respectively a control plane CU entity (that is, a CU-CP entity) and a user plane CU entity (that is, a CU-UP entity). The CU-CP entity and the CU-UP entity may be coupled to the DU, to jointly complete functions of the access network device. In this way, some functions of the radio access network device may be implemented by a plurality of network function entities. These network function entities may be network elements in a hardware device, or may be software functions run on dedicated hardware, or may be virtualized functions instantiated on a platform (for example, a cloud platform).

In embodiments of this application, an apparatus configured to implement a function of the access network device may be an access network device, or may be an apparatus that can support the access network device in implementing the function, for example, a chip system, or a combined component or part that can implement the function of the access network device. The apparatus may be installed in the access network device. In embodiments of this application, the chip system may include a chip, or may include a chip and another discrete component.

The following explains and describes related technical features in embodiments of this application. It should be noted that these explanations are intended to make embodiments of this application easier to understand, but should not be considered as a limitation on the protection scope claimed in this application.

### 1. Paging (Paging)

A network device may notify, through paging, a terminal device in an RRC idle state (RRC_IDLE) or an RRC inactive state (RRC_INACTIVE) to receive a paging message (paging message). Alternatively, a network device may send, through paging, a short message (short message) to a terminal device in an RRC idle state (RRC_IDLE), an RRC inactive state (RRC_INACTIVE), or an RRC connected state (RRC_CONNECTED), to indicate a system information (system information, SI) update or an earthquake and tsunami warning/commercial mobile alert (earthquake and tsunami warning system/commercial mobile alert service, ETWS/CAMS).

FIG. 2 is a diagram of a paging occasion and a paging cycle. As shown in FIG. 2, a terminal device in an RRC idle state or an RRC inactive state monitors a paging occasion (paging occasion, PO) of the terminal device in each paging cycle (paging cycle), to determine whether a network device performs paging.

Generally, the terminal device may calculate a PO location of the terminal device based on terminal device identification information of the terminal device and a paging-related parameter according to a calculation formula specified in a protocol. PO locations calculated by different terminal devices may be the same. In other words, a plurality of terminal devices may monitor a same PO.

Specifically, a basic paging procedure is as follows:
The network device selects a specific paging range, and sends paging downlink control information (downlink control information, DCI) on a PO. The paging range is an area in which the network device sends paging. The area is determined by the network device. For example, for the terminal device in the RRC idle state, the network device may use a registration area (registration area) to which the terminal device belongs as a paging range. For the terminal device in the RRC inactive state, the network device may use an access network device-based notification area to which the terminal device belongs as a paging range. Herein, the access network device-based notification area may be a RAN-based notification area (RAN-based notification area, RNA). The paging DCI may include scheduling information (including time-frequency domain information of a resource for scheduling a paging message and other scheduling information) for the paging message (paging message), a short message, and/or the like. Specific content is shown in the following Table 1:

**Table 1**

| Bit field (bit field) | Size and meaning |
|---|---|
| Short message indicator (short message indicator) | [2 bits] indicate a content type in current paging DCI: "01" indicate that only scheduling information for a paging message exists; "10" indicate that only a short message exists; "11" indicate that both the scheduling information for the paging message and the short message exist; and "00" are reserved bits (that is, this value is not used) |
| Short message (short message) | [8 bits] system information update indication and/or earthquake and tsunami warning/commercial mobile alert |
| Frequency domain resource assignment (frequency domain resource assignment) | [Calculating a size based on a related parameter] indicate a frequency domain resource location of the paging message |
| Time domain resource assignment (time domain resource assignment) | [4 bits] indicate a time domain resource location of the paging message |
| Others | [1+5+2 bits] other scheduling information |
| Reserved | [6 bits] reserved bits, that is, bits that are not used temporarily |

After receiving the paging DCI sent by the network device, the terminal device determines a subsequent operation based on content of the paging DCI. Details are as follows:
In a possible implementation, if the paging DCI includes the scheduling information for the paging message, the terminal device receives and decodes the paging message on a physical downlink shared channel (physical downlink shared channel, PDSCH) based on the scheduling information, and then determines the subsequent operation based on content of the paging message. The paging message includes terminal device identification information of one or more terminal devices paged by the network device and/or access type information of a paged terminal device. After decoding the paging message, the terminal device determines whether the paging message includes a terminal device identifier of the terminal device. Generally, if the paging message does not include the terminal device identifier of the terminal device, the terminal device ignores the paging message; or if the paging message includes the terminal device identifier of the terminal device, the terminal device determines the subsequent operation based on other content in the paging message.

In a possible implementation, if the paging DCI includes the short message, the terminal device receives updated system information and/or an earthquake and tsunami warning/commercial mobile alert based on an indication of the short message.

In a possible implementation, if the paging DCI includes the scheduling information for the paging message and the short message, the terminal device separately receives the paging message and updated system information and/or an earthquake and tsunami warning/commercial mobile alert based on a specified procedure.

It should be noted that, paging may be classified into core network paging triggered by a core network device and access network paging triggered by an access network device based on different network elements that trigger paging. The network device may initiate the core network paging to the terminal device in RRC_IDLE, and may initiate the core network paging or the access network paging to the terminal device in RRC_INACTIVE.

### 2. RRC idle state (RRC_IDLE)

When the terminal device is in the RRC idle state, the terminal device does not retain information such as a radio resource control (radio resource control, RRC) context (context). The RRC context is a parameter for establishing communication between the terminal device and the network device. The RRC context may include a security context, capability information of the terminal device, and the like. At the same time, the terminal device does not establish a connection to the core network device. Generally, the terminal device in the RRC idle state only periodically wakes up to receive the paging message.

### 3. RRC inactive state (RRC_INACTIVE)

When the terminal device is in the RRC inactive state, an RRC context is retained between the terminal device and the network device. At the same time, the terminal device also establishes a connection to the core network device, that is, the core network device is in a core network connected state (CN_CONNECTED). In this case, a procedure of switching to a connected state to receive data is relatively fast, and no additional core network signaling overheads are generated. In addition, the terminal device in the RRC inactive state also enters a sleep state. Therefore, the RRC inactive state can meet requirements of reducing a connection latency, signaling overheads, and power consumption.

### 4. RRC connected state (RRC_CONNECTED)

When the terminal device is in the RRC connected state, the terminal device has established an RRC context. A parameter required for establishing communication between the terminal device and the network device has been obtained by both communication parties. The network device allocates a cell radio network temporary identifier (cell radio network temporary identifier, C-RNTI) to a terminal device that accesses the network device. At the same time, the terminal device also establishes a connection to the core network device. In this case, if the terminal device is transmitting data, the terminal device is in a continuous reception state, and is switched to connected state discontinuous reception (discontinuous reception, DRX) when entering a waiting state after data transmission is completed, to reduce power consumption. If the terminal device still has to-be-transmitted data subsequently, the terminal device returns to the continuous reception state again. In this case, because the RRC context is established, switching time required when the terminal device leaves connected state DRX and prepares for continuous reception is much shorter than time required when the terminal device switches from the RRC idle state to the RRC connected state.

### 5. Wake-up signal (wake-up signal, WUS)

A power saving signal (power saving signal) is a signal introduced to achieve a power-saving purpose of the terminal device, and the WUS is a type of power saving signal. There may be a plurality of types of WUSs including DCI, a physical layer signal/sequence (sequence), a medium access control control element (medium access control control element, MAC CE), RRC signaling, and the like.

For a paging process, as shown in FIG. 3, the network device may send a WUS before a PO or on the PO, to indicate whether the terminal device needs to monitor the PO or receive a paging message subsequently, to avoid unnecessary paging receiving of the terminal device. For example, if the network device does not page the terminal device currently, the network device may send the WUS before the PO to indicate that the terminal device does not need to monitor an associated PO, and the terminal device does not monitor the associated PO. Alternatively, the network device may not send the WUS before the PO, and when the terminal device does not detect/receive the WUS, the terminal device does not monitor a PO associated with the WUS.

It should be noted that one WUS may be associated with one or more POs, that is, one WUS may indicate the terminal device to monitor or not monitor one or more POs.

In a paging scenario, the WUS may also be referred to as a paging early indication (paging early indication, PEI).

### 6. Terminal device subgrouping (subgrouping) mechanism

A problem of a paging false alarm (false alarm) exists in an existing paging mechanism. To be specific, a terminal device receives and decodes a paging message, but finds that a network device actually does not page the terminal device.

A main reason for generating the paging false alarm is that a plurality of terminal devices monitor a same PO. When the plurality of terminal devices monitor the same PO, based on the existing paging mechanism, when receiving paging DCI, a terminal device obtains only scheduling information for a paging message, and cannot distinguish whether the paging message is a paging message for the terminal device. The terminal device can determine, based on terminal device identification information in the paging message only after subsequently receiving and decoding the paging message on a PDSCH, whether current paging is for the terminal device. Consequently, for a terminal device that is actually not paged, unnecessary PDSCH receiving and decoding exist, and unnecessary power consumption of the terminal device is generated.

The terminal device subgrouping mechanism is one of mechanisms for reducing the paging false alarm. A basic idea of the terminal device subgrouping mechanism is as follows:
Subgrouping is performed on terminal devices that monitor a same PO, that is, terminal devices on a same PO are classified into different subgroups. In a simple example, it is assumed that a terminal device 1, a terminal device 2, a terminal device 3, a terminal device 4, and a terminal device 5 monitor a same PO 1. The terminal devices on the PO 1 are classified into three subgroups. A subgroup 1 includes the terminal device 1 and the terminal device 2, a subgroup 2 includes the terminal device 3 and the terminal device 4, and a subgroup 3 includes the terminal device 5.

The network device indicates, by using a PEI, related information (that is, a subgroup indication) of a subgroup to which a terminal device for which current paging is belongs. For example, the subgroup indication may be a bitmap (bitmap), and each bit (bit) corresponds to one subgroup. When a terminal device in a subgroup is paged, the network device sets a bit corresponding to the subgroup to 1, and sets a bit corresponding to another subgroup that is not paged to 0.

When receiving the PEI, a terminal device can determine, based on the subgroup indication, whether the current paging is for a subgroup to which the terminal device belongs. If the current paging is for the subgroup to which the terminal device belongs, the terminal device monitors a PO based on an original paging mechanism, that is, receives paging DCI, and then receives and decodes a paging message based on scheduling information in the paging DCI. If the current paging is not for the subgroup to which the terminal device belongs, the terminal device does not monitor a PO and does not receive paging.

Therefore, the terminal device subgrouping mechanism can be used to reduce a probability of unnecessary paging receiving of the terminal device, and further reduce additional power consumption of the terminal device.

There may be different types of terminal device subgrouping mechanisms based on a specific implementation for subgrouping of terminal devices, for example, core network device controlled terminal device subgrouping (core network device subgrouping for short below) and terminal device identifier based terminal device subgrouping (terminal device identifier subgrouping for short below). Herein, the core network device controlled terminal device subgrouping may be CN controlled subgrouping (CN controlled subgrouping), and the terminal device identifier based terminal device subgrouping may be UE ID based subgrouping (UE ID based subgrouping).

The core network device subgrouping is a terminal device subgrouping mechanism in which the core network device (for example, an AMF) is responsible for subgrouping of terminal devices. The following steps may be included.

Step 1: A terminal device may report terminal device assistance information to a core network device (for example, an AMF), to assist the core network device in determining a subgroup to which the terminal device belongs. The assistance information may be paging probability (paging probability) information of the terminal device, power profile (power profile) information of the terminal device, or the like.

Step 2: The core network device determines the subgroup to which the terminal device belongs, and sends subgroup information of the terminal device (for example, a subgroup number of the terminal device) to the terminal device. Herein, the subgroup number of the terminal device may be a terminal device subgroup ID (UE subgroup ID). How the core network device determines the subgroup to which the terminal device belongs may be implemented by the core network device. For example, the core network device may refer to the terminal device assistance information and/or other information provided by the terminal device.

Step 3: The core network device provides the subgroup information of the terminal device to an access network device.

Step 4: The access network device may broadcast some parameters related to a core network device subgrouping mechanism.

The terminal device identifier subgrouping is a mechanism for determining, based on ID information of the terminal device and a total quantity of subgroups sent by an access network device, a subgroup to which the terminal device belongs. For example, assuming that a total quantity of terminal device identifier subgroups is N, a simple calculation manner of a terminal device subgroup number is: subgroup ID = UE_ID mod N, where subgroup ID represents a subgroup number, and UE_ID represents a terminal device identifier. The following steps may be included.

Step 1: An access network device broadcasts some parameters related to a terminal device identifier subgrouping mechanism.

Step 2: A terminal device and the access network device separately calculate a terminal device subgroup number based on ID information of the terminal device and the parameters related to the terminal device identifier subgrouping mechanism.

### 7. Reporting and maintenance of a paging capability of a terminal device

The paging capability of the terminal device is also referred to as a paging-related terminal device capability. First, the terminal device reports the paging capability of the terminal device in a terminal device capability reporting procedure. Specifically, the paging capability of the terminal device may include: (1) a PEI capability, indicating specific band (band) on which the terminal device supports a PEI, and particularly, supporting the PEI also means supporting the terminal device identifier subgrouping mechanism; (2) a PO identifier (index) calculation capability, indicating whether the terminal device in an RRC_INACTIVE state supports use of a PO identifier in an RRC_IDLE state; (3) a receive antenna channel quantity (Rx branch) capability, indicating a quantity of receive antenna channels supported by a reduced capability (reduced capability, RedCap) terminal device; (4) a half-duplex capability, indicating whether the RedCap terminal device supports half-duplex/indicating specific bands on which half-duplex is supported; (5) a downlink scheduling capability, indicating whether the terminal device supports a downlink scheduling slot offset (DL scheduling slot offset) greater than 0 for a PDSCH; or (6) a band support capability, indicating a band supported by the terminal device.

After receiving the paging-related terminal device capability reported by the terminal device, the access network device generates a terminal device radio paging information message (UERadioPagingInformation message) based on the paging-related terminal device capability. The access network device sends the message to a core network. The core network receives and stores the terminal device radio paging information message sent by the access network device.

For the core network paging, when the core network initiates paging to a terminal device, the core network forwards terminal device radio paging information of the terminal device to each access network device participating in the current paging. After receiving the terminal device radio paging information of the terminal device, the access network device may determine, based on a related terminal device capability in the terminal device radio paging information, how to initiates paging to the terminal device.

For the access network paging, when an anchor (anchor) access network device initiates paging to a terminal device, the anchor access network device forwards terminal device radio paging information of the terminal device to each access network device participating in the current paging. After receiving the terminal device radio paging information of the terminal device, the access network device may determine, based on a related terminal device capability in the terminal device radio paging information, how to initiates paging to the terminal device.

It should be noted that, after receiving the paging capability reported by the terminal device, the access network device may fail to parse the paging capability reported by the terminal device, and therefore cannot include the paging capability reported by the terminal device in the terminal device radio paging information message for sending to the core network. After the terminal device reports the paging capability, the terminal device considers that the network device has learned of the paging capability of the terminal device, and therefore considers that the network device uses a paging mechanism that is based on the paging capability of the terminal device. However, because the network device does not learn of the paging capability reported by the terminal device, the network device still uses an original paging mechanism for paging. As a result, the terminal device cannot normally receive paging of the network device. For example, the terminal device reports the PEI capability, but the access network device is not upgraded to a version that supports a PEI feature. As a result, the access network device cannot parse the PEI capability reported by the terminal device, and therefore cannot include the PEI capability reported by the terminal device in a terminal device radio paging information message sent to the core network device. The core network device does not learn of the PEI capability reported by the terminal device. Therefore, when the core network device performs paging, terminal device paging capability information pushed by the core network device to each access network device does not include the PEI capability reported by the terminal device. Alternatively, when the access network device performs paging, terminal device paging capability information pushed by the anchor access network device to each access network device does not include the PEI capability reported by the terminal device. However, the terminal device cannot learn of the foregoing case, but considers that the terminal device has reported the PEI capability and the network device has learned of PEI capability information of the terminal device. Therefore, after entering the RRC_IDLE/RRC_INACTIVE state, the terminal device uses a PEI-based paging mechanism for the access network device that supports the PEI feature. However, because the access network device cannot obtain the PEI capability reported by the terminal device, the access network device does not use a PEI to page the terminal device. Specifically, the terminal device monitors the PEI, but the access network device does not send the PEI to the terminal device. As a result, the terminal device cannot be paged. In other words, that the terminal device and the network device have a consistent understanding of the paging capability of the terminal device is a prerequisite for the terminal device and the network device to normally use the paging mechanism that is based on the paging capability of the terminal device. Therefore, how to enable the terminal device and the network device to have the consistent understanding of the paging capability of the terminal device so that the paging mechanism that is based on the paging capability of the terminal device can be normally used, to improve paging reliability becomes one of urgent problems to be resolved currently.

Based on this, embodiments of this application provide a communication method and a related apparatus, so that a terminal device and a network device can have a consistent understanding of a paging capability of the terminal device, to improve paging reliability.

It should be noted that a "feature" in embodiments of this application may be understood as a mechanism or a function, and a "capability" in embodiments of this application may be understood as including but not limited to a paging capability. The feature may have a corresponding terminal device capability, and the terminal device capability indicates whether the terminal device supports the feature.

The following describes in detail the communication method and the related apparatus provided in this application.

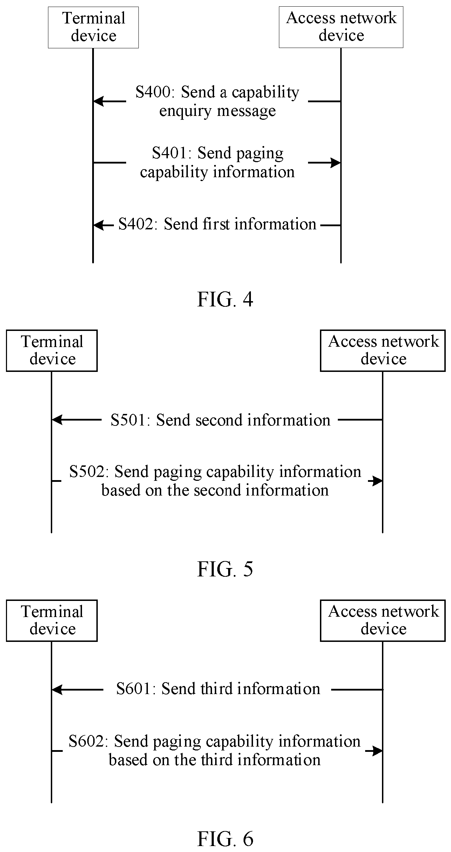

FIG. 4 is a schematic flowchart of a communication method according to an embodiment of this application. As shown in FIG. 4, the communication method includes the following steps S400 to S402. The method shown in FIG. 4 may be performed by a terminal device or an access network device. Alternatively, the method shown in FIG. 4 may be performed by a chip in the terminal device or the access network device. The following embodiment of this application is described by using the terminal device and the access network device as an example.

S401: The terminal device sends paging capability information to the access network device.

Correspondingly, the access network device receives the paging capability information from the terminal device. That the paging capability information indicates one or more paging capabilities supported by the terminal device may be understood as follows: The terminal device reports a paging capability of the terminal device to the access network device by using the paging capability information. For example, the paging capability includes one or more of the following: a PEI capability, a PO identifier calculation capability, a receive antenna channel quantity capability, a half-duplex capability, a downlink scheduling capability, a band support capability, or the like. This is not limited herein. For an understanding of the foregoing paging capabilities, refer to the related descriptions in the foregoing descriptions of reporting and maintenance of a paging capability of a terminal device. Details are not described herein again.

Herein, a paging capability information element may be UERadioPagingInformation. Usually, the paging capability information element may be carried in a UERadioPagingInformation message.

Optionally, before step S401, the following step S400 may further be included.

S400: The access network device sends a capability enquiry message to the terminal device.

Correspondingly, the terminal device receives the capability enquiry message from the access network device. Herein, that the capability enquiry message is used to request the terminal device to report a capability may be understood as follows: The capability enquiry message is used to trigger the terminal device to send the paging capability information to the access network device. Therefore, the terminal device may send the paging capability information to the access network device based on the received capability enquiry message. Herein, the capability enquiry message may be specifically a terminal device capability enquiry message (for example, a UECapabilityEnquiry message), or the like. This is not limited herein.

Step S400 may be that a core network device triggers the access network device to query the paging capability of the terminal device. For example, the core network device sends indication information to the access network device, to indicate the access network device to request the terminal device to report the paging capability of the terminal device. Alternatively, step S400 may be that the access network device actively queries the paging capability of the terminal device. Herein, the access network device may actively query the paging capability of the terminal device because the access network device does not receive the paging capability information of the terminal device. For example, when the access network device does not receive the paging capability information of the terminal device from the core network device, the access network device may actively request the terminal device to report the paging capability of the terminal device. Alternatively, step S400 may be that the terminal device triggers a paging capability reporting procedure of the terminal device, so that the core network device triggers the access network device to query the paging capability of the terminal device. For example, the terminal device sends indication information 1 to the core network device, to indicate that the terminal device needs to update the paging capability information of the terminal device (where the indication information 1 may be carried in a mobility registration request message), and the core network device sends indication information 2 to the access network device, to indicate the access network device to request the terminal device to report the paging capability of the terminal device. Alternatively, step S400 may be that the terminal device triggers a paging capability reporting procedure of the terminal device, so that the access network device queries the paging capability of the terminal device. For example, the terminal device sends indication information to the access network device, to indicate that the terminal device needs to update the capability information of the terminal device.

S402: The access network device sends first information to the terminal device.

Correspondingly, the terminal device receives the first information from the access network device. That the first information indicates that the access network device successfully maintains the one or more paging capabilities indicated by the paging capability information may be understood as follows: The first information indicates that the access network device successfully maintains all paging capabilities reported by the terminal device, that is, indicates the one or more paging capabilities as a whole. Herein, the first information may also indicate whether the access network device successfully maintains the one or more paging capabilities indicated by the paging capability. If the network device successfully maintains all paging capabilities reported by the terminal device, the first information indicates that the one or more paging capabilities are successfully maintained. In other cases, it is considered that the one or more paging capabilities are not successfully maintained. Alternatively, the first information indicates at least one paging capability successfully maintained by the access network device, and the at least one paging capability is at least one of the one or more paging capabilities indicated by the paging capability information, which may be understood as follows: The first information indicates a paging capability successfully maintained by the access network device in the paging capability reported by the terminal device. Herein, "successfully maintained" may be understood as "already maintained".

It should be noted that after the access network device receives the paging capability information, the access network device may parse the paging capability information, to obtain the one or more paging capabilities indicated by the paging capability information. Further, the access network device may generate a paging capability information element (for example, add the one or more paging capabilities obtained through parsing to the paging capability information element) based on the one or more paging capabilities obtained through parsing, and send the paging capability information element to the core network device, or send the paging capability information element to another access network device when initiating access network paging. Herein, parsing may also be understood as interpretation or processing.

Correspondingly, that the access network device successfully maintains one or more paging capabilities may be understood as follows: The access network device has obtained one or more capability information through parsing, and the access network device has generated the paging capability information element based on the one or more paging capabilities obtained through parsing, or the access network device has sent, to the core network device or the another access network device, the paging capability information element including the one or more paging capabilities obtained through parsing. Usually, if the access network device supports a feature, it may be considered that the access network device can maintain a paging capability corresponding to the feature. In addition, even if the access network device does not support a feature, it does not necessarily mean that the access network device cannot successfully maintain a paging capability corresponding to the feature.

Specifically, the first information may include one or more first indication information and/or one or more second indication information. The first indication information indicates that the access network device successfully maintains one paging capability, and the second indication information indicates that the access network device successfully maintains a plurality of paging capabilities. In other words, one piece of indication information may correspond to one or more paging capabilities. Herein, the plurality of paging capabilities (which may be understood as a correspondence between the second indication information and the plurality of paging capabilities) indicated by the second indication information are predefined in a protocol, are configured by the access network device, or are preconfigured.

For example, it may be predefined in the protocol that first indication information 1 corresponds to the PEI capability, first indication information 2 corresponds to the PO identifier calculation capability, second indication information 1 corresponds to the antenna channel quantity capability and the half-duplex capability, and second indication information 2 corresponds to the downlink scheduling capability and the band support capability. Herein, different indication information may be carried in a same message or different messages and sent to the terminal device. For example, the first information includes the first indication information 1 and the second indication information 1. The first indication information 1 and the second indication information 1 may be carried in a same message, or may be carried in different messages. In this case, for example, the terminal device reports all paging capabilities corresponding to the first indication information 1, the first indication information 2, the second indication information 1, and the second indication information 2, but the access network device successfully maintains only the PEI capability, the antenna channel quantity capability, and the half-duplex capability that are reported by the terminal device. Therefore, the access network device sends the first indication information 1 and the second indication information 1 to the terminal device, to respectively notify the terminal device that the access network device successfully maintains the PEI capability reported by the terminal device, and the access network device successfully maintains the antenna channel quantity capability and the half-duplex capability that are reported by the terminal device.

Optionally, the terminal device may subsequently determine, based on the first information of the access network device, whether the access network device successfully maintains the paging capability reported by the terminal device, to determine how to perform a paging-related operation. For example, if the terminal device receives the first information of the access network device, the terminal device determines that the access network device successfully maintains the paging capability corresponding to the first information. If the paging capability corresponding to the first information is not all the paging capabilities reported by the terminal device, it is considered that the access network device does not successfully maintain a remaining paging capability. For another example, if the terminal device does not receive the first information of the access network device within a period of time or before a procedure, the terminal device determines that the access network device does not successfully maintain the paging capability reported by the terminal device. If the terminal device determines that the access network device successfully maintains a paging capability or some paging capabilities, the terminal device considers that the paging capability has been successfully reported, and may subsequently use a mechanism corresponding to the paging capability. If the terminal device determines that the access network device does not successfully maintain a paging capability or some paging capabilities, the terminal device considers that the paging capability is not successfully reported, and subsequently does not use a mechanism corresponding to the paging capability.

For example, if the terminal device receives the first information of the access network device for the PEI capability, the terminal device considers that the PEI capability reported by the terminal device has been processed, and may subsequently use a PEI mechanism. A condition for using the PEI mechanism by the terminal device may be one or more of the following: A cell on which the terminal device camps supports a PEI feature (that is, a current cell sends PEI-related configuration information in system information), and the terminal device supports a terminal device subgrouping mechanism used by the current cell.

In this embodiment of this application, to enable the terminal device and the network device to have a consistent understanding of the paging capability of the terminal device, the terminal device receives, from the access network device, the first information indicating that the paging capability reported by the terminal device is successfully maintained. Herein, it may be understood as that the access network device acknowledges reporting of the paging capability of the terminal device. In this manner, the terminal device may determine whether the access network device successfully maintains the paging capability reported by the terminal device, so that the terminal device and the network device have the consistent understanding of the paging capability of the terminal device, to improve paging reliability. For example, in this manner, the terminal device may determine whether mechanisms corresponding to these paging capabilities can be used in a subsequent paging-related operation, so that the terminal device and the access network device do not perform different paging operations, to ensure that the terminal device can normally receive paging of the access network device.

FIG. 5 is another schematic flowchart of a communication method according to an embodiment of this application. As shown in FIG. 5, the communication method includes the following steps S501 and S502. The method shown in FIG. 5 may be performed by a terminal device or an access network device. Alternatively, the method shown in FIG. 5 may be performed by a chip in the terminal device or the access network device. The following embodiment of this application is described by using the terminal device and the access network device as an example.

S501: The access network device sends second information to the terminal device.

Correspondingly, the terminal device receives the second information from the access network device. That the second information indicates one or more paging capabilities requested by the access network device may be understood as follows: The access network device requests the terminal device to report a specified paging capability of the terminal device. For an understanding of the paging capability, refer to the related descriptions in the method embodiment corresponding to FIG. 4. Details are not described herein again.

Specifically, the second information may include one or more third indication information and/or one or more fourth indication information. The third indication information indicates the one or more paging capabilities requested by the access network device. The fourth indication information indicates one or more paging capability fields requested by the access network device, and the paging capability field corresponds to one or more paging capabilities. It should be noted that the one or more paging capabilities corresponding to the paging capability field may be understood as one or more paging capabilities that are allowed to be included in the paging capability field. A paging capability actually included in the paging capability field may be all paging capabilities that are allowed to be included in the paging capability field, or may be a part of the paging capabilities. The one or more paging capabilities (that is, specific paging capabilities may be included in the paging capability field) corresponding to the paging capability field may be predefined in a protocol, configured by the access network device, or preconfigured.

Specifically, the third indication information and the fourth indication information may be filters related to the paging capability of the terminal device. The third indication information may be a filter for the paging capability. Herein, "for the paging capability" may be understood as "directly for one or more paging capabilities, or for a feature or some features", and the feature corresponds to one or more paging capabilities. For example, third indication information 1 is a filter for a PEI capability, and third indication information 2 is a filter for a PO identifier calculation capability. For another example, third indication information 1 is a filter for a PEI capability and a PO identifier calculation capability, third indication information 2 is a filter for a RedCap feature, and the feature corresponds to an antenna channel quantity capability and a half-duplex capability. The fourth indication information may be a filter for the paging capability field. For example, fourth indication information 1 is a filter for a paging capability field 1, and the paging capability field 1 corresponds to the PEI capability. For another example, fourth indication information 2 is a filter for a paging capability field 2, and the paging capability field 2 corresponds to the receive antenna channel quantity capability and the half-duplex capability.

In an implementation, the second information may be carried in a capability enquiry message sent by the access network device. In other words, the access network device sends the capability enquiry message to the terminal device. Correspondingly, the terminal device receives the capability enquiry message from the access network device, and the capability enquiry message includes the second information. For an understanding of the capability enquiry message (including a triggering manner thereof), refer to the related descriptions in the method embodiment corresponding to FIG. 4. Details are not described herein again.

In another implementation, the second information may alternatively be carried in a message other than the capability enquiry message and sent to the terminal device. In other words, the access network device may separately send the capability enquiry message and the second information to the terminal device. The capability enquiry message is used to request the terminal device to report a capability, and the second information indicates the one or more paging capabilities requested by the access network device. Therefore, after receiving the capability enquiry message and the second information from the access network device, the terminal device may send paging capability information to the access network device based on the second information and the capability enquiry message.

In this embodiment of this application, an example in which the second information is carried in the capability enquiry message for sending is mainly used for understanding.

S502: The terminal device sends the paging capability information to the access network device based on the second information.

Correspondingly, the access network device receives the paging capability information from the terminal device. The paging capability information indicates at least one paging capability supported by the terminal device, and the at least one paging capability is at least one of the one or more paging capabilities indicated by the second information, which may be understood as follows: The paging capability information is used to report a paging capability supported by the terminal device in the paging capabilities requested by the access network device. In other words, the paging capability reported by the terminal device does not exceed a range of the paging capabilities requested by the access network device, and the paging capabilities requested by the access network does not exceed a range of the paging capabilities that can be maintained by the access network device. Therefore, it can be ensured that the paging capability reported by the terminal device can be successfully maintained by the access network device. When the second information includes the indication information of the paging capability field requested by the access network device, the terminal device may report the paging capability field requested by the access network device. The paging capability field includes one or more paging capabilities supported by the terminal device. It should be noted that the one or more paging capabilities included in the paging capability field may be understood as a paging capability actually included (that is, carried) in the paging capability field.

It should be noted that, if the access network device sends the second information to the terminal device, it indicates that the terminal device is requested to report the one or more paging capabilities indicated by the second information. For example, the access network device sends second information 1, and the second information 1 indicates the PEI capability, indicating that the access network device requests the terminal device to report the PEI capability. If the terminal device supports the PEI capability, the terminal device needs to report the PEI capability. If the terminal device does not support the PEI capability, the terminal device does not report the PEI capability. For another example, the access network device sends second information 2, and the second information 2 indicates the paging capability field 2 (corresponding to the receive antenna channel quantity capability and the half-duplex capability), indicating that the access network device requests the terminal device to report the paging capabilities corresponding to the paging capability field 2. If the terminal device supports the two capabilities, the terminal device reports the receive antenna channel quantity capability and the half-duplex capability by using the paging capability field 2. If the terminal device supports the receive antenna channel quantity capability but does not support the half-duplex capability, the terminal device reports the receive antenna channel quantity capability by using the paging capability field 2. If the terminal device does not support the two capabilities, the terminal device does not report the two capabilities.

It may be understood as that when the access network device can maintain a paging capability of the terminal device, the access network device may send corresponding second information to the terminal device to request the terminal device to report the paging capability. For an understanding of "can maintain", refer to the related descriptions of successful maintenance in the method embodiment corresponding to FIG. 4 ("can maintain" may be understood as having a capability of successful maintenance). Details are not described herein again. For example, the access network device can maintain the PEI capability, and therefore sends the second information 1 (indicating the PEI capability) to the terminal device. Herein, the access network device may support the PEI feature, or may not support the PEI feature.

Optionally, if the terminal device reports, based on the second information sent by the access network device, the paging capability supported by the terminal device in step S502, the terminal device may determine that the paging capability of the terminal device is successfully reported (that is, in a normal case, the paging capability reported by the terminal device is successfully maintained by the access network device), and then determine how to perform a paging-related operation. For example, if the terminal device reports a paging capability or some paging capabilities, the terminal device may subsequently use a mechanism corresponding to the paging capability, and does not use a mechanism corresponding to a paging capability that is not reported.

Optionally, after the access network device receives the paging capability information, the access network device may parse the paging capability information, to obtain the at least one paging capability that is supported by the terminal device and that is indicated by the paging capability information. Further, the access network device may generate a paging capability information element based on the at least one paging capability obtained through parsing, and send the paging capability information element to a core network device, or send the paging capability information element to another access network device when initiating access network paging.

For example, assuming that the terminal device receives the second information used by the access network device to indicate to request the PEI capability, and the terminal device reports the PEI capability of the terminal device to the access network device, the terminal device considers that the PEI capability reported by the terminal device can be successfully maintained by the access network device, and may subsequently use a PEI mechanism.

In this embodiment of this application, to enable the terminal device and a network device to have a consistent understanding of the paging capability of the terminal device, the access network device requests the paging capability by using the second information, and the terminal device reports, based on the second information, the paging capability supported by the terminal device. Herein, it may be understood as that the terminal device reports, to the access network device, the paging capability supported by the terminal device in the paging capabilities requested by the access network device. In this manner, the terminal device may determine that the reported paging capability can be successfully maintained by the network device, so that the terminal device and the network device have the consistent understanding of the paging capability of the terminal device, to improve paging reliability. For example, in this manner, the terminal device may learn that the paging capabilities requested by the access network device are paging capabilities that can be successfully maintained by the access network device. Therefore, after the terminal device successfully reports the paging capability supported by the terminal device in the paging capabilities requested by the access network device, the terminal device may determine that the reported paging capability can be successfully maintained by the access network device, and then determine that mechanisms corresponding to these paging capabilities can be used in a subsequent paging-related operation, so that the terminal device and the access network device do not perform different paging operations, to ensure that the terminal device can normally receive paging of the access network device.

FIG. 6 is another schematic flowchart of a communication method according to an embodiment of this application. As shown in FIG. 6, the communication method includes the following steps S601 and S602. The method shown in FIG. 6 may be performed by a terminal device or an access network device. Alternatively, the method shown in FIG. 6 may be performed by a chip in the terminal device or the access network device. The following embodiment of this application is described by using the terminal device and the access network device as an example.

S601: The access network device sends third information to the terminal device.

Correspondingly, the terminal device receives the third information from the access network device. That the third information indicates one or more paging capabilities that can be maintained by the access network device may be understood as follows: The access network device notifies the terminal device of a capability of maintaining a paging capability of the terminal device. For an understanding of the paging capability, refer to the related descriptions in the method embodiment corresponding to FIG. 4. For an understanding of "can maintain", refer to the related descriptions of successful maintenance in the method embodiment corresponding to FIG. 4 ("can maintain" may be understood as having a capability of successful maintenance). Details are not described herein again.

The third information includes one or more of the following: one or more fifth indication information, one or more sixth indication information, one or more seventh indication information, and one or more eighth indication information. The fifth indication information indicates one or more paging capabilities. The sixth indication information indicates one or more paging capability fields, and the paging capability field corresponds to one or more paging capabilities. The seventh indication information indicates one or more features, and the feature corresponds to one or more paging capabilities. Alternatively, the eighth indication information indicates one or more protocol versions, and the protocol version corresponds to one or more paging capabilities. It may be understood as that, specific manners in which the third information indicates the one or more paging capabilities that can be maintained by the access network device may include the following four manners: 1. The third information directly includes a paging capability that can be maintained by the access network device. 2. The third information directly includes a paging capability field that can be maintained by the access network device. 3. The third information directly includes a feature supported by the access network device. 4. The third information directly includes a protocol version supported by the access network device. The one or more paging capabilities that can be maintained by the access network device are paging capabilities corresponding to the feature, and the one or more paging capabilities that can be maintained by the access network device are paging capabilities supported by the protocol version.

Herein, the third information may be sent in a broadcast manner, or may be sent to the terminal device by using dedicated signaling. Specifically, the third information may be carried in DCI, system information, an RRC message, or the like. This is not limited herein.

For example, if the access network device can maintain a PEI capability, the access network device may send third information 1, where the third information 1 includes indication information of the PEI capability, so that the terminal device can learn that the access network device can maintain the PEI capability. For another example, if the access network device can maintain a PEI capability, the access network device may send third information 2, where the third information 2 includes indication information of the foregoing paging capability field 1 (corresponding to the PEI capability), so that the terminal device can learn that the access network device can maintain the PEI capability. For another example, if the access network device supports a RedCap feature, the access network device sends third information 3, where the third information 3 includes indication information of the RedCap feature, and the feature corresponds to an antenna channel quantity capability and a half-duplex capability, so that the terminal device can learn that the access network device can maintain the antenna channel quantity capability and the half-duplex capability. For still another example, if the access network device can maintain a paging capability corresponding to a protocol version of release 17 (Release 17, R17), the access network device may send third information 4, where the third information 4 includes indication information of R17, so that the terminal device can learn that the access network device can maintain the paging capability corresponding to R17. Herein, the access network device may support a feature of R17, or may not support a feature of R17, but can maintain the paging capability corresponding to the feature of R17. If the access network device supports a plurality of versions, a highest version supported by the access network device may be indicated.

Optionally, the third indication information may alternatively be used in combination with other information. For example, if the access network device supports a PEI feature but does not enable a PEI mechanism (that is, the access network device does not start or use the PEI mechanism), the access network device does not send configuration information of a PEI, and the access network device sends the third information; or if the access network device supports a PEI feature and enables a PEI mechanism (that is, the access network device starts or uses the PEI mechanism), the access network device sends configuration information of a PEI, and in this case, the access network device may send or may not send the third information. Herein, the configuration information of the PEI is used to configure the PEI. For example, the configuration information of the PEI may be used to configure a monitoring occasion of the PEI, or used to configure a time-frequency resource for sending the PEI. This is not limited herein.

Optionally, in addition to sending the third information to the terminal device, the access network device may further send a capability enquiry message to the terminal device. In other words, the third information is sent independently of the capability enquiry message. Correspondingly, the terminal device receives the third information and the capability enquiry message from the access network device. For an understanding of the capability enquiry message (including a triggering manner thereof), refer to the related descriptions in the method embodiment corresponding to FIG. 4. Details are not described herein again. Therefore, the terminal device may send paging capability information to the access network device based on the third information and the capability enquiry message. In other words, the terminal device may send the paging capability information to the access network device based on triggering of the capability enquiry message and the paging capability that can be maintained by the access network device and that is indicated by the third information.

Optionally, the third information may alternatively be carried in the capability enquiry message sent by the access network device. In other words, the access network device sends the capability enquiry message to the terminal device. Correspondingly, the terminal device receives the capability enquiry message from the access network device, and the capability enquiry message includes the third information.

In this embodiment of this application, an example in which the third information is sent independently of the capability enquiry message is mainly used for understanding.

S602: The terminal device sends the paging capability information to the access network device based on the third information.

Correspondingly, the access network device receives the paging capability information from the terminal device. The paging capability information indicates at least one paging capability supported by the terminal device, and the at least one paging capability is at least one of the one or more paging capabilities indicated by the third information, which may be understood as follows: The paging capability information is used to report a paging capability supported by the terminal device in the paging capabilities that can be maintained by the access network device. In other words, the paging capability reported by the terminal device does not exceed a range of the paging capabilities that can be maintained by the access network device. Therefore, it can be ensured that the paging capability reported by the terminal device can be successfully maintained by the access network device.

It should be noted that, the access network device sends the third information to the terminal device, which only indicates that the access network device is capable of maintaining the one or more paging capabilities indicated by the third information, and does not indicate that the terminal device is requested to report the one or more paging capabilities. It may be understood as that if any paging capability in the one or more paging capabilities is supported by the terminal device, the terminal device may choose to report the supported paging capability, or may choose not to report the supported paging capability.

For example, if the terminal device receives third information 5, where the third information 5 includes indication information of the PEI feature, and the feature corresponds to the PEI capability, the terminal device reports the PEI capability if the terminal device supports the PEI capability. For another example, if the terminal device receives the foregoing third information 2 (which includes the foregoing indication information of the paging capability field 1, and the paging capability field 1 corresponds to the PEI capability), the terminal device may report the PEI capability by using the paging capability field 1 if the terminal device supports the PEI capability. For another example, if the terminal device receives third information 6, where the third information 6 includes indication information of release 15 (Release 15, R15), and a paging capability corresponding to R15 does not include the PEI capability, the terminal device does not report the PEI capability even if the terminal device supports the PEI capability.

Optionally, if the terminal device reports, in step S602 based on the third information sent by the access network device, the paging capability supported by the terminal device, the terminal device may determine that the paging capability of the terminal device is successfully reported, and then determine how to perform a paging-related operation. For example, if the terminal device reports a paging capability or some paging capabilities, the terminal device may subsequently use a mechanism corresponding to the paging capability, and does not use a mechanism corresponding to a paging capability that is not reported.

Optionally, if the terminal device reports, in step S602 based on the third information sent by the access network device, the paging capability supported by the terminal device, the terminal device may determine that the paging capability of the terminal device is successfully reported, and then determine how to perform a paging-related operation. For example, if the terminal device reports a paging capability or some paging capabilities, the terminal device may subsequently use a mechanism corresponding to the paging capability, and does not use a mechanism corresponding to a paging capability that is not reported.

Optionally, after the access network device receives the paging capability information, the access network device may parse the paging capability information, to obtain the one or more paging capabilities that are supported by the terminal device and that are indicated by the paging capability information. Further, the access network device may generate a paging capability information element based on the one or more paging capabilities obtained through parsing, and send the paging capability information element to a core network device, or send the paging capability information element to another access network device when initiating access network paging.

For example, assuming that the terminal device receives the third information indicating that the access network device can maintain the PEI capability, and the terminal device reports the PEI capability of the terminal device to the access network device, the terminal device considers that the PEI capability reported by the terminal device has been processed, and may subsequently use the PEI mechanism.

In this embodiment of this application, to enable the terminal device and a network device to have a consistent understanding of the paging capability of the terminal device, the access network device notifies, by using the third information, the terminal device of the paging capability that can be maintained by the access network device, and the terminal device reports, based on the third information, the paging capability supported by the terminal device. Herein, it may be understood as that the terminal device reports, to the access network device, the paging capability supported by the terminal device in the paging capabilities that can be maintained by the access network device. In this manner, the terminal device may determine that the reported paging capability can be successfully maintained by the network device, so that the terminal device and the network device have the consistent understanding of the paging capability of the terminal device, to improve paging reliability. For example, in this manner, the terminal device may learn of specific paging capabilities that can be successfully maintained by the access network device. Therefore, the terminal device may correspondingly report the paging capability of the terminal device. After successfully reporting the paging capability supported by the terminal device in the paging capabilities requested by the access network device, the terminal device may determine that the reported paging capability can be successfully maintained by the access network device, and then determine that mechanisms corresponding to these paging capabilities can be used in a subsequent paging-related operation, so that the terminal device and the network device do not perform different paging operations, to ensure that the terminal device can normally receive paging of the network device.

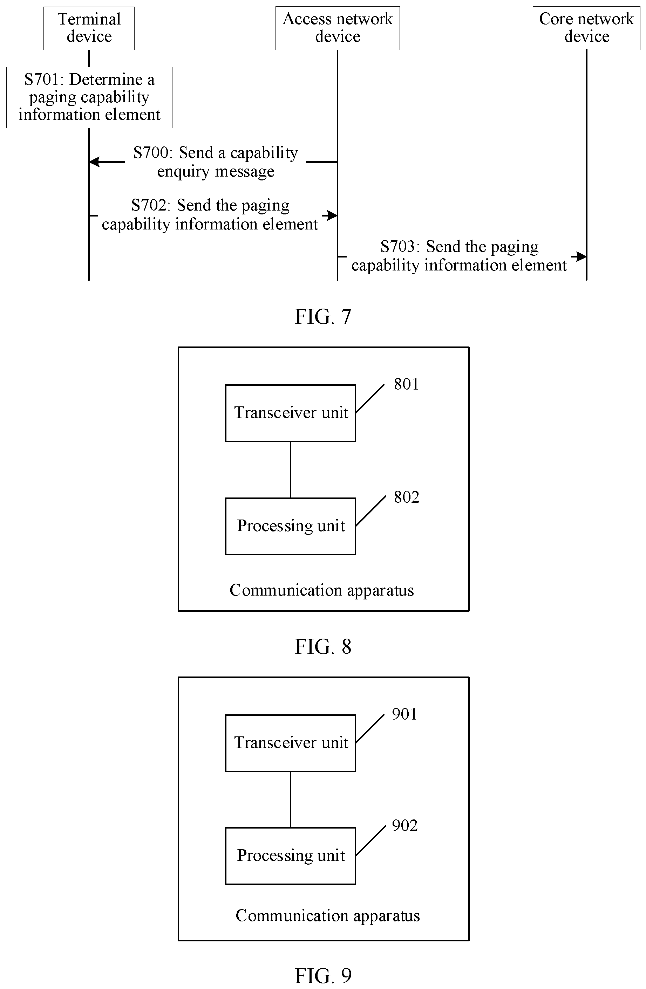

FIG. 7 is another schematic flowchart of a communication method according to an embodiment of this application. As shown in FIG. 7, the communication method includes the following steps S700 to S703. The method shown in FIG. 7 may be performed by a terminal device or an access network device. Alternatively, the method shown in FIG. 7 may be performed by a chip in the terminal device or the access network device. The following embodiment of this application is described by using the terminal device and the access network device as an example.

S701: The terminal device determines a paging capability information element.

The paging capability information element may also be referred to as a container. The paging capability information element includes one or more paging capabilities supported by the terminal device. For an understanding of the paging capability, refer to the related descriptions in the method embodiment corresponding to FIG. 4. Details are not described herein again. The one or more paging capabilities (that is, specific paging capabilities may be included in the paging capability information element) that are allowed to be included in the paging capability information element may be specified in a protocol, configured by the access network device, or preconfigured.

S702: The terminal device sends the paging capability information element to the access network device.

Correspondingly, the access network device receives the paging capability information element from the terminal device.

Herein, if the terminal device reports, in step S702, the paging capability information element related to the paging capability, the terminal device may determine that the capability included in the paging capability information element is successfully reported, and then determine how to perform a paging-related operation. For example, if the terminal device reports a paging capability signal that includes a paging capability or some paging capabilities, the terminal device may subsequently use a mechanism corresponding to the paging capability, and does not use a mechanism corresponding to a paging capability that is not reported.

Optionally, before step S702, the following step S700 may further be included.

S700: The access network device sends a capability enquiry message to the terminal device.

Correspondingly, the terminal device receives the capability enquiry message from the access network device. Therefore, the terminal device may send paging capability information to the access network device based on the received capability enquiry message. For an understanding of the capability enquiry message (including a triggering manner thereof), refer to the related descriptions in the method embodiment corresponding to FIG. 4. Details are not described herein again.

S703: The access network device sends the paging capability information element to a core network device.

Herein, it may be understood as that the access network device directly sends the received paging capability information element. In other words, the access network device may forward, to the core network device, the paging capability information element reported by the terminal device. Correspondingly, the core network device receives and stores the paging capability information element from the access network device. Herein, "forwarding" means that the access network device does not need to perform secondary processing (for example, further parsing processing) on the paging capability information element.

Optionally, when initiating access network paging, the access network device may alternatively forward the paging capability information element to another access network device.

For example, assuming that the terminal device reports, to the access network device, the paging capability information element including a PEI capability, the terminal device considers that the PEI capability reported by the terminal device has been processed, and may subsequently use a PEI mechanism.

In this embodiment of this application, to enable the terminal device and a network device to have a consistent understanding of the paging capability of the terminal device, the terminal device reports the paging capability information element to the access network device, so that the access network device sends the paging capability information element to the core network device. Herein, it may be understood as that the access network device directly forwards the paging capability information element received from the terminal device, and the access network device does not need to perform secondary processing on the paging capability reported by the terminal device to generate the paging capability information element and then send the paging capability information element to the core network device. In this manner, the terminal device may determine that the paging capability reported by using the paging capability information element can be successfully maintained by the network device, so that the terminal device and the network device have the consistent understanding of the paging capability of the terminal device, to improve paging reliability. For example, in this manner, after successfully completing a capability reporting procedure of the terminal device, the terminal device may determine that the reported paging capability can be successfully maintained by the network device, and then determine that mechanisms corresponding to these capabilities can be used in a subsequent paging-related operation, so that the terminal device and the network device do not perform different paging operations, to ensure that the terminal device can normally receive paging of the network device.

It should be understood that in the foregoing embodiments, the terminal device and/or the access network device may perform some or all of the steps in embodiments. These steps or operations are merely examples. Other operations or variations of various operations may be further performed in embodiments of this application. In addition, the steps may be performed in a sequence different from a sequence presented in embodiments, and not all the operations in embodiments of this application may be performed. In addition, sequence numbers of the steps do not mean an execution sequence. An execution sequence of the processes should be determined based on functions and internal logic of the processes, and should not constitute any limitation on the implementation processes of embodiments of this application.

It should be understood that one or more steps included in an embodiment of this application may alternatively be used in combination with one or more steps in another embodiment. This is not limited herein. In addition, similar steps or terms in embodiments of this application may be understood with reference to each other. It should not be considered that some descriptions are not applicable to another embodiment because the descriptions appear only in a single embodiment.

Communication apparatuses provided in this application are described below in detail with reference to FIG. 8 to FIG. 11.

FIG. 8 is a diagram of a structure of a communication apparatus according to an embodiment of this application. The communication apparatus shown in FIG. 8 may be configured to perform some or all functions of the terminal device in the method embodiments described in FIG. 4 to FIG. 7. The apparatus may be a terminal device, an apparatus in the terminal device, or an apparatus that can be used with the terminal device. The communication apparatus may alternatively be a chip system. The communication apparatus shown in FIG. 8 may include a transceiver unit 801 and a processing unit 802. The processing unit 802 is configured to process data. The transceiver unit 801 is integrated with a receiving unit and a sending unit. The transceiver unit 801 may also be referred to as a communication unit. Alternatively, the transceiver unit 801 may be split into a receiving unit and a sending unit. The processing unit 802 and the transceiver unit 801 below are similar, and details are not described below again.

In an implementation, the transceiver unit 801 is configured to send paging capability information to an access network device, where the paging capability information indicates one or more paging capabilities supported by the terminal device; and the transceiver unit 801 is configured to receive first information from the access network device, where the first information indicates that the access network device successfully maintains one or more paging capabilities, or indicates at least one paging capability successfully maintained by the access network device, and the at least one paging capability successfully maintained by the access network device is at least one of the one or more paging capabilities supported by the terminal device.

In a possible implementation, the transceiver unit 801 is further configured to receive a capability enquiry message from the access network device, where the capability enquiry message is used to request the terminal device to report a capability; and the sending paging capability information to an access network device includes: sending the paging capability information to the access network device based on the capability enquiry message.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

In a possible implementation, the first information includes one or more first indication information and/or one or more second indication information; the first indication information indicates one paging capability; and the second indication information indicates a plurality of paging capabilities.

In a possible implementation, the plurality of paging capabilities indicated by the second indication information are predefined in a protocol, are configured by the access network device, or are preconfigured.

In another implementation, the transceiver unit 801 is configured to receive second information from an access network device, where the second information indicates one or more paging capabilities requested by the access network device; and the processing unit 802 is configured to send paging capability information to the access network device based on the second information through the transceiver unit 801, where the paging capability information indicates at least one paging capability supported by the terminal device, and the at least one paging capability is at least one of the one or more paging capabilities requested by the access network device.

In a possible implementation, the second information includes one or more third indication information and/or one or more fourth indication information; the third indication information indicates one or more paging capabilities; and the fourth indication information indicates one or more paging capability fields, and the paging capability field corresponds to one or more paging capabilities.

In a possible implementation, the one or more paging capabilities corresponding to the paging capability field are predefined in a protocol, are configured by the access network device, or are preconfigured.

In a possible implementation, when receiving the second information from the access network device, the transceiver unit 801 is configured to receive a capability enquiry message from the access network device, where the capability enquiry message is used to request the terminal device to report a capability and includes the second information; and the sending paging capability information to the access network device based on the second information includes: sending the paging capability information to the access network device based on the capability enquiry message.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

In another implementation, the transceiver unit 801 is configured to receive third information from an access network device, where the third information indicates one or more paging capabilities that can be maintained by the access network device; and the processing unit 802 is configured to send paging capability information to the access network device based on the third information through the transceiver unit 801, where the paging capability information indicates at least one paging capability supported by the terminal device, and the at least one paging capability supported by the terminal device is at least one of the one or more paging capabilities that can be maintained by the access network device.

In a possible implementation, the one or more paging capabilities that can be maintained by the access network device include the one or more paging capabilities supported by the terminal device.

In a possible implementation, the third information includes one or more of the following: one or more fifth indication information, one or more sixth indication information, one or more seventh indication information, and one or more eighth indication information;
the fifth indication information indicates one or more paging capabilities; the sixth indication information indicates one or more paging capability fields, and the paging capability field corresponds to one or more paging capabilities; the seventh indication information indicates one or more features, and the feature corresponds to one or more paging capabilities; or the eighth indication information indicates one or more protocol versions, and the protocol version corresponds to one or more paging capabilities.

In a possible implementation, the transceiver unit 801 is further configured to receive a capability enquiry message from the access network device, where the capability enquiry message is used to request the terminal device to report a capability; and send paging capability information to the access network device based on the third information; and the processing unit 802 is configured to send the paging capability information to the access network device based on the third information and the capability enquiry message through the transceiver unit 801.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

In another implementation, the processing unit 802 is configured to determine a paging capability information element; and the transceiver unit 801 is configured to send the paging capability information element to an access network device, where the paging capability information element includes one or more paging capabilities supported by the terminal device.

In a possible implementation, the one or more paging capabilities that are allowed to be included in the paging capability information element are predefined in a protocol, are configured by the access network device, or are preconfigured.

In a possible implementation, the transceiver unit 801 is further configured to receive a capability enquiry message from the access network device, where the capability enquiry message is used to request the terminal device to report a capability.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

For another possible implementation of the communication apparatus, refer to the related descriptions of the functions of the terminal device in the method embodiments corresponding to FIG. 4 to FIG. 7. Details are not described herein again.

FIG. 9 is a diagram of a structure of another communication apparatus according to an embodiment of this application. The communication apparatus shown in FIG. 9 may be configured to perform some or all functions of the access network device in the method embodiments described in FIG. 4 to FIG. 7. The apparatus may be an access network device, an apparatus in the access network device, or an apparatus that can be used with the access network device. The communication apparatus may alternatively be a chip system. The communication apparatus shown in FIG. 9 may include a transceiver unit 901.

In an implementation, the transceiver unit 901 is configured to receive paging capability information from a terminal device, where the paging capability information indicates one or more paging capabilities supported by the terminal device; and the transceiver unit 901 is configured to send first information to the terminal device, where the first information indicates that the access network device successfully maintains one or more paging capabilities, or indicates at least one paging capability successfully maintained by the access network device, and the at least one paging capability successfully maintained by the access network device is at least one of the one or more paging capabilities supported by the terminal device.

In a possible implementation, the transceiver unit 901 is further configured to send a capability enquiry message to the terminal device, where the capability enquiry message is used to request the terminal device to report a capability.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

In a possible implementation, the first information includes one or more first indication information and/or one or more second indication information; the first indication information indicates that the access network device successfully maintains one paging capability; and the second indication information indicates that the access network device successfully maintains a plurality of paging capabilities.

In a possible implementation, the plurality of paging capabilities indicated by the second indication information are predefined in a protocol, are configured by the access network device, or are preconfigured.

In a possible implementation, the apparatus further includes: a processing unit 902, configured to parse the one or more paging capabilities included in the paging capability information. The processing unit 902 is configured to generate a paging capability information element based on the one or more paging capabilities; and the transceiver unit 901 is configured to send the paging capability information element to a core network device.

In another implementation, the transceiver unit 901 is configured to send second information to a terminal device, where the second information indicates one or more paging capabilities requested by the access network device; and the transceiver unit 901 is configured to receive paging capability information from the terminal device, where the paging capability information indicates at least one paging capability supported by the terminal device, and the at least one paging capability is at least one of the one or more paging capabilities requested by the access network device.

In a possible implementation, the second information includes one or more third indication information and/or one or more fourth indication information; the third indication information indicates one or more paging capabilities; and the fourth indication information indicates one or more paging capability fields, and the paging capability field corresponds to one or more paging capabilities.

In a possible implementation, the one or more paging capabilities corresponding to the paging capability field are predefined in a protocol, are configured by the access network device, or are preconfigured.

In a possible implementation, when sending the second information to the terminal device, the transceiver unit 901 is configured to send a capability enquiry message to the terminal device, where the capability enquiry message is used to request the terminal device to report a capability and includes the second information.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

In a possible implementation, the apparatus further includes: a processing unit 902, configured to parse the one or more paging capabilities included in the paging capability information. The processing unit 902 is configured to generate a paging capability information element based on the one or more paging capabilities; and the transceiver unit 901 is configured to send the paging capability information element to a core network device.

In another implementation, the transceiver unit 901 is configured to send third information to a terminal device, where the third information indicates one or more paging capabilities that can be maintained by the access network device; and the transceiver unit 901 is configured to receive paging capability information from the terminal device, where the paging capability information indicates at least one paging capability supported by the terminal device, and the at least one paging capability supported by the terminal device is at least one of the one or more paging capabilities that can be maintained by the access network device.

In a possible implementation, the one or more paging capabilities that can be maintained by the access network device include the one or more paging capabilities supported by the terminal device.

In a possible implementation, the third information includes one or more of the following: one or more fifth indication information, one or more sixth indication information, one or more seventh indication information, and one or more eighth indication information; the fifth indication information indicates one or more paging capabilities; the sixth indication information indicates one or more paging capability fields, and the paging capability field corresponds to one or more paging capabilities; the seventh indication information indicates one or more features, and the feature corresponds to one or more paging capabilities; or the eighth indication information indicates one or more protocol versions, and the protocol version corresponds to one or more paging capabilities.

In a possible implementation, the transceiver unit 901 is further configured to send a capability enquiry message to the terminal device, where the capability enquiry message is used to request the terminal device to report a capability.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

In a possible implementation, the apparatus further includes: a processing unit 902, configured to parse the one or more paging capabilities included in the paging capability information. The processing unit 902 is configured to generate a paging capability information element based on the one or more paging capabilities; and the transceiver unit 901 is configured to send the paging capability information element to a core network device.

In another implementation,
the transceiver unit 901 is configured to receive a paging capability information element from a terminal device, where the paging capability information element includes one or more paging capabilities supported by the terminal device; and the transceiver unit 901 is configured to send the paging capability information element to a core network device.

In a possible implementation, the one or more paging capabilities that are allowed to be included in the paging capability information element are predefined in a protocol, are configured by the access network device, or are preconfigured.

In a possible implementation, the transceiver unit 901 is further configured to send a capability enquiry message to the terminal device, where the capability enquiry message is used to request the terminal device to report a capability.

In a possible implementation, the paging capability includes one or more of the following: a paging early indication PEI capability, a paging occasion PO identifier calculation capability, a receive antenna channel quantity capability, a half-duplex capability, a downlink scheduling capability, or a band support capability.

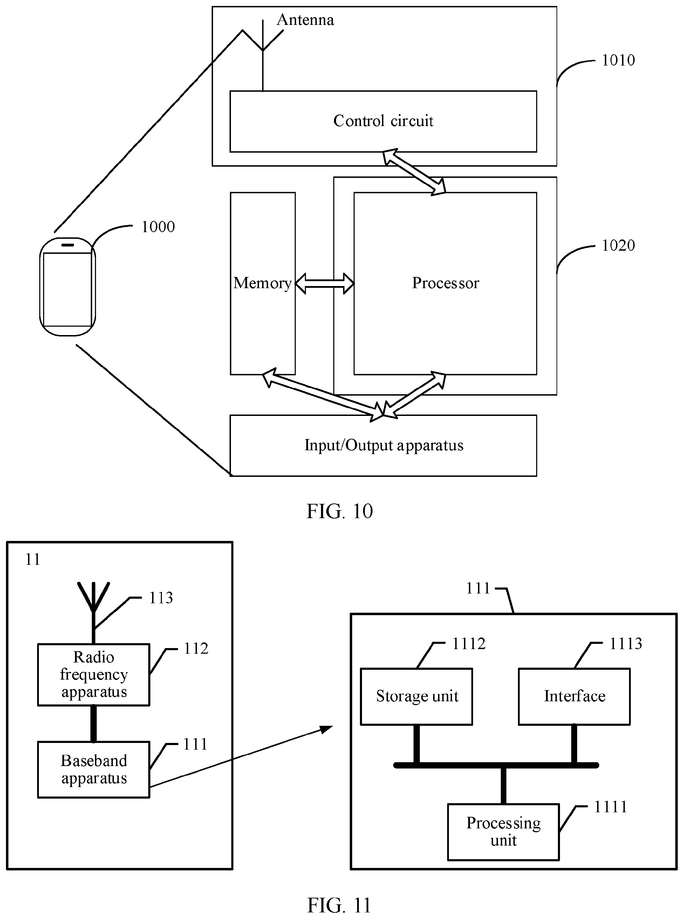

FIG. 10 is a diagram of a structure of another communication apparatus according to an embodiment of this application. As shown in FIG. 10, the communication apparatus may be the terminal device described in embodiments of this application. For ease of description, FIG. 10 shows only main components of a terminal device 1000. As shown in FIG. 10, the terminal device 1000 includes a processor, a memory, a control circuit, an antenna, and an input/output apparatus. The processor is mainly configured to process a communication protocol and communication data, control the entire terminal device 1000, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, for example, a touchscreen, a display, a microphone, or a keyboard, is mainly configured to receive data input by a user and output data to the user.

For example, the terminal device 1000 is a mobile phone. After the terminal device 1000 is powered on, the processor may read a software program in a storage unit, interpret and execute instructions of the software program, and process data of the software program. When data needs to be sent wirelessly, the processor performs baseband processing on the to-be-sent data, and then outputs a baseband signal to the control circuit. The control circuit performs radio frequency processing on the baseband signal, and then sends a radio frequency signal to the outside in the form of the electromagnetic wave through the antenna. When data is sent to the terminal device 1000, the control circuit receives a radio frequency signal through the antenna, converts the radio frequency signal into a baseband signal, and outputs the baseband signal to the processor; and the processor converts the baseband signal into data, and processes the data.

A person skilled in the art may understand that, for ease of description, FIG. 10 shows only one memory and only one processor. In some embodiments, the terminal device 1000 may include a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process a communication protocol and communication data, and the central processing unit is mainly configured to control the entire terminal device 1000, execute a software program, and process data of the software program. The processor in FIG. 10 integrates functions of the baseband processor and the central processing unit. A person skilled in the art may understand that the baseband processor and the central processing unit may be alternatively processors independent of each other, and are connected to each other by using a technology such as a bus. The terminal device 1000 may include a plurality of baseband processors to adapt to different network standards, the terminal device 1000 may include a plurality of central processing units to enhance a processing capability of the terminal device, and components of the terminal device 1000 may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 1010 of the terminal device 1000, and the processor having a processing function may be considered as a processing unit 1020 of the terminal device 1000. As shown in FIG. 10, the terminal device 1000 includes the transceiver unit 1010 and the processing unit 1020. The transceiver unit may also be referred to as a transceiver, a transceiver machine, a transceiver apparatus, or the like. Optionally, a component for implementing a receiving function in the transceiver unit 1010 may be considered as a receiving unit, and a component for implementing a sending function in the transceiver unit 1010 may be considered as a sending unit. In other words, the transceiver unit 1010 includes the receiving unit and the sending unit. For example, the receiving unit may also be referred to as a receiver, a receiver machine, a receiver circuit, or the like, and the sending unit may be referred to as a transmitter, a transmitter machine, a transmitter circuit, or the like.

FIG. 11 is a diagram of a structure of another communication apparatus according to an embodiment of this application. As shown in FIG. 11, the communication apparatus may be the access network device described in embodiments of this application. The access network device 11 includes a baseband apparatus 111, a radio frequency apparatus 112, and an antenna 113. In an uplink direction, the radio frequency apparatus 112 receives, through the antenna 113, information sent by a terminal device, and sends, to the baseband apparatus 111 for processing, the information sent by the terminal device. In a downlink direction, the baseband apparatus 111 processes information of the terminal device, and sends the information to the radio frequency apparatus 112. The radio frequency apparatus 112 processes the information of the terminal device, and then sends the information to the terminal device through the antenna 113.

The baseband apparatus 111 includes one or more processing units 1111, a storage unit 1112, and an interface 1113. The processing unit 1111 is configured to support the access network device in performing a function of the access network device in the foregoing method embodiments. The storage unit 1112 is configured to store a software program and/or data. The interface 1113 is configured to exchange information with the radio frequency apparatus 112. The interface includes an interface circuit, configured to input and output information. In an implementation, the processing unit is an integrated circuit, for example, one or more application-specific integrated circuits (application-specific integrated circuit, ASIC), one or more digital signal processors (digital signal processor, DSP), one or more field programmable gate arrays (field programmable gate array, FPGA), or a combination of such integrated circuits. These integrated circuits may be integrated together to form a chip. The storage unit 1112 and the processing unit 1111 may be located in a same chip, that is, an on-chip storage element. Alternatively, the storage unit 1112 and the processing unit 1111 may be located on different chips, that is, an off-chip storage element. The storage unit 1112 may be a memory, or may be a collective term of a plurality of memories or storage elements.

The access network device may implement a part of or all steps in the foregoing method embodiments in a form of scheduling a program by one or more processing units. For example, corresponding functions of the access network device in FIG. 4 to FIG. 7 are implemented. The one or more processing units may support radio access technologies of a same standard, or may support radio access standards of different standards.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, in combination with the examples described in embodiments disclosed in this specification, units and steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into units is merely logical function division. The units described as separate components may or may not be physically separate, and components displayed as units may or may not be physical units, may be located in one place, or may be distributed on a plurality of network units. Some or all of the units may be selected based on actual requirements to achieve the objectives of the solutions of embodiments.

When functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of instructions or a data structure and that can be accessed by the computer. In addition, by way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, wherein the method is applied to a terminal device, and the method comprises:
sending paging capability information to an access network device, wherein the paging capability information indicates one or more paging capabilities supported by the terminal device; and
receiving first information from the access network device, wherein the first information indicates that the access network device successfully maintains the one or more paging capabilities, or indicates at least one paging capability successfully maintained by the access network device, and the at least one paging capability successfully maintained by the access network device is at least one of the one or more paging capabilities supported by the terminal device.

2. The method according to claim 1, wherein the method further comprises:
receiving a capability enquiry message from the access network device, wherein the capability enquiry message is used to request the terminal device to report a capability; and
the sending paging capability information to an access network device comprises:
sending the paging capability information to the access network device based on the capability enquiry message.

3. The method according to claim 1 or 2, wherein the first information comprises one or more first indication information and/or one or more second indication information;
the first indication information indicates one paging capability; and
the second indication information indicates a plurality of paging capabilities.

4. The method according to claim 3, wherein the plurality of paging capabilities indicated by the second indication information are predefined in a protocol, are configured by the access network device, or are preconfigured.

5. A communication method, wherein the method is applied to a terminal device, and the method comprises:
receiving second information from an access network device, wherein the second information indicates one or more paging capabilities requested by the access network device; and
sending paging capability information to the access network device based on the second information, wherein the paging capability information indicates at least one paging capability supported by the terminal device, and the at least one paging capability is at least one of the one or more paging capabilities requested by the access network device.

6. The method according to claim 5, wherein the second information comprises one or more third indication information and/or one or more fourth indication information;
the third indication information indicates one or more paging capabilities; and
the fourth indication information indicates one or more paging capability fields, and the paging capability field corresponds to one or more paging capabilities.

7. The method according to claim 6, wherein the one or more paging capabilities corresponding to the paging capability field are predefined in a protocol, are configured by the access network device, or are preconfigured.

8. The method according to any one of claims 5 to 7, wherein the receiving second information from an access network device comprises:
receiving a capability enquiry message from the access network device, wherein the capability enquiry message is used to request the terminal device to report a capability and comprises the second information; and
the sending paging capability information to the access network device based on the second information comprises:
sending the paging capability information to the access network device based on the capability enquiry message.

9. A communication method, wherein the method is applied to a terminal device, and the method comprises:
receiving third information from an access network device, wherein the third information indicates one or more paging capabilities that can be maintained by the access network device; and
sending paging capability information to the access network device based on the third information, wherein the paging capability information indicates at least one paging capability supported by the terminal device, and the at least one paging capability supported by the terminal device is at least one of the one or more paging capabilities that can be maintained by the access network device.

10. The method according to claim 9, wherein the third information comprises one or more of the following: one or more fifth indication information, one or more sixth indication information, one or more seventh indication information, and one or more eighth indication information;
the fifth indication information indicates one or more paging capabilities;
the sixth indication information indicates one or more paging capability fields, and the paging capability field corresponds to one or more paging capabilities;
the seventh indication information indicates one or more features, and the feature corresponds to one or more paging capabilities; or
the eighth indication information indicates one or more protocol versions, and the protocol version corresponds to one or more paging capabilities.

11. The method according to claim 9 or 10, wherein the method further comprises:
receiving a capability enquiry message from the access network device, wherein the capability enquiry message is used to request the terminal device to report a capability; and
the sending paging capability information to the access network device based on the third information comprises:
sending the paging capability information to the access network device based on the third information and the capability enquiry message.

12. A communication method, wherein the method is applied to an access network device, and the method comprises:
receiving paging capability information from a terminal device, wherein the paging capability information indicates one or more paging capabilities supported by the terminal device; and
sending first information to the terminal device, wherein the first information indicates that the access network device successfully maintains the one or more paging capabilities, or indicates at least one paging capability successfully maintained by the access network device, and the at least one paging capability successfully maintained by the access network device is at least one of the one or more paging capabilities supported by the terminal device.

13. The method according to claim 12, wherein the method further comprises:
sending a capability enquiry message to the terminal device, wherein the capability enquiry message is used to request the terminal device to report a capability.

14. The method according to claim 12 or 13, wherein the first information comprises one or more first indication information and/or one or more second indication information;
the first indication information indicates that the access network device successfully maintains one paging capability; and
the second indication information indicates that the access network device successfully maintains a plurality of paging capabilities.

15. The method according to claim 14, wherein the plurality of paging capabilities indicated by the second indication information are predefined in a protocol, are configured by the access network device, or are preconfigured.

16. A communication method, wherein the method is applied to an access network device, and the method comprises:
sending second information to a terminal device, wherein the second information indicates one or more paging capabilities requested by the access network device; and
receiving paging capability information from the terminal device, wherein the paging capability information indicates at least one paging capability supported by the terminal device, and the at least one paging capability is at least one of the one or more paging capabilities requested by the access network device.

17. The method according to claim 16, wherein the second information comprises one or more third indication information and/or one or more fourth indication information;
the third indication information indicates one or more paging capabilities; and
the fourth indication information indicates one or more paging capability fields, and the paging capability field corresponds to one or more paging capabilities.

18. The method according to claim 17, wherein the one or more paging capabilities corresponding to the paging capability field are predefined in a protocol, are configured by the access network device, or are preconfigured.

19. The method according to any one of claims 16 to 18, wherein the sending second information to a terminal device comprises:
sending a capability enquiry message to the terminal device, wherein the capability enquiry message is used to request the terminal device to report a capability and comprises the second information.

20. A communication method, wherein the method is applied to an access network device, and the method comprises:
sending third information to a terminal device, wherein the third information indicates one or more paging capabilities that can be maintained by the access network device; and
receiving paging capability information from the terminal device, wherein the paging capability information indicates one or more paging capabilities supported by the terminal device, and the at least one paging capability supported by the terminal device is at least one of the one or more paging capabilities that can be maintained by the access network device.

21. The method according to claim 20, wherein the one or more paging capabilities that can be maintained by the access network device comprise the one or more paging capabilities supported by the terminal device.

22. The method according to claim 20 or 21, wherein
the third information comprises one or more of the following: one or more fifth indication information, one or more sixth indication information, one or more seventh indication information, and one or more eighth indication information;
the fifth indication information indicates one or more paging capabilities;
the sixth indication information indicates one or more paging capability fields, and the paging capability field corresponds to one or more paging capabilities;
the seventh indication information indicates one or more features, and the feature corresponds to one or more paging capabilities; or
the eighth indication information indicates one or more protocol versions, and the protocol version corresponds to one or more paging capabilities.

23. The method according to any one of claims 20 to 22, wherein the method further comprises:
sending a capability enquiry message to the terminal device, wherein the capability enquiry message is used to request the terminal device to report a capability.

24. The method according to any one of claims 1 to 23, wherein the paging capability comprises one or more of the following:
a paging early indication PEI capability, a paging occasion PO identifier calculation capability, a receive antenna channel quantity capability, a half-duplex capability, a downlink scheduling capability, or a band support capability.

25. A communication apparatus, comprising a unit or a module configured to perform the method according to any one of claims 1 to 11, or comprising a unit or a module configured to perform the method according to any one of claims 12 to 24.

26. A communication apparatus, wherein the communication apparatus comprises a processor and a storage medium, the storage medium stores instructions, and when the instructions are run by the processor, the method according to any one of claims 1 to 11 is implemented, or the method according to any one of claims 12 to 24 is implemented.

27. A computer-readable storage medium, wherein the computer-readable storage medium comprises instructions, and when the instructions are run by a processor, the method according to any one of claims 1 to 11 is implemented, or the method according to any one of claims 12 to 24 is implemented.

28. A computer program product, wherein the computer program product comprises instructions, and when the instructions are run by a processor, the method according to any one of claims 1 to 11 is implemented, or the method according to any one of claims 12 to 24 is implemented.
